# EUROPEAN PATENT APPLICATION

(11) **EP 2 680 653 A1**
(43) Date of publication of application: **01.01.2014**
(21) Application number: 13165943.5
(22) Date of filing: 30.04.2013
(51) Int. Cl.: H04W 72/04, H04L 1/18

(54) **Method of handling resource allocation in TDD system and related communication device**

(30) Priority: 02.05.2012 US 201261641310 P; 29.04.2013 US 201313873167
(71) Applicant: Industrial Technology Research Institute, Chutung, Hsinchu 310 (TW)
(72) Inventor: Lee, Chien-Min, 221 New Taipei City (TW)
(74) Representative: Becker Kurig Straus

(57) **Abstract**

A method of handling resource allocation for a network of a wireless communication system comprises configuring a direction of a subframe of a frame, when the direction determined according to a first uplink (UL)/downlink (DL) configuration operated by a communication device of the wireless communication system and the direction determined according to a second UL/DL configuration operated by the network are different, when the subframe is a UL subframe determined according to the first UL/DL configuration, or when the subframe is the DL subframe determined according to the first UL/DL configuration but at least for the communication device is not valid for performing a measurement; and performing a transmission or reception with the communication device in the subframe.

## Description

### Field of the Invention

The present invention relates to a method used in a wireless communication system and related communication device, and more particularly, to a method of handling resource allocation in a time-division duplexing (TDD) system and related communication device.

### Background of the Invention

A long-term evolution (LTE) system supporting the 3rd Generation Partnership Project (3GPP) Rel-8 standard and/or the 3GPP Rel-9 standard have been developed by the 3GPP as a successor of the universal mobile telecommunications system (UMTS), for further enhancing performance of the UMTS to satisfy increasing needs of users. The LTE system includes a new radio interface and a new radio network architecture that provides a high data rate, low latency, packet optimization, and improved system capacity and coverage. In the LTE system, a radio access network known as an evolved universal terrestrial radio access network (E-UTRAN) includes multiple evolved Node-Bs (eNBs) for communicating with multiple user equipments (UEs), and communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, and includes advanced techniques, such as carrier aggregation (CA), coordinated multipoint transmission/reception (CoMP), UL multiple-input multiple-output (MIMO), etc. For a UE and an eNB to communicate with each other in the LTE-A system, the UE and the eNB must support standards developed for the LTE-A system, such as the 3GPP Rel-10 standard or later versions.

Different from the LTE/LTE-A system with frequency-division duplexing (FDD), directions of subframes of a frequency band in the LTE/LTE-A system with time-division duplexing (TDD) may be different. That is, the subframes in the same frequency band are divided into uplink (UL) subframes, downlink (DL) subframes and special subframes according to the UL/DL configuration specified in the 3GPP standard.

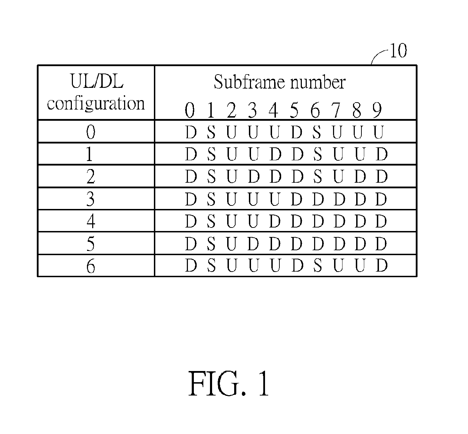

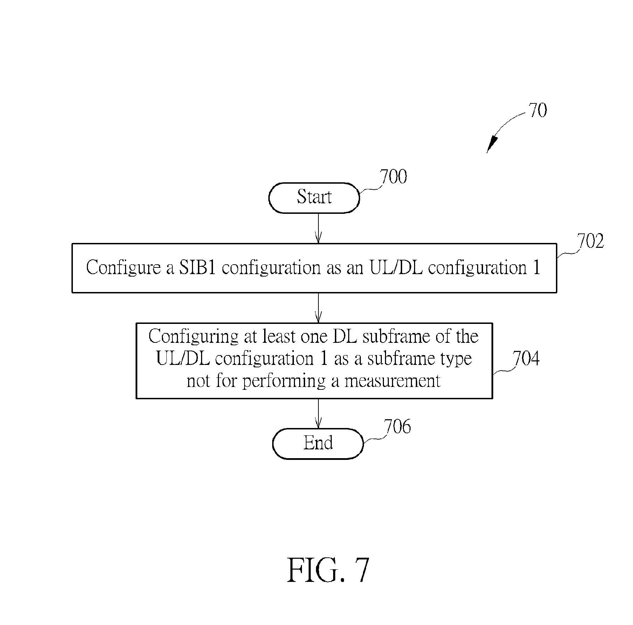

Please refer to Fig. 1 which is a table 10 of the UL/DL configuration with subframes and corresponding directions. In Fig. 1, 7 UL/DL configurations are shown, wherein each of the UL/DL configurations indicates a set of directions for 10 subframes, respectively. In detail, "U" means that the subframe is a UL subframe where UL data is transmitted, and "D" means that the subframe is a DL subframe where DL data is transmitted. "S" means that the subframe is a special subframe where control information and maybe data (according to the special subframe configuration) is transmitted, and the special subframe can also be seen as the DL subframe in the present invention.

Furthermore, a UL/DL configuration of a legacy UE can be changed according to system information (e.g., System Information Block Type 1 (SIB1)) transmitted by an eNB, e.g., from the UL/DL configuration 1 to the UL/DL configuration 3. A minimum periodicity of transmitting the SIB1 is usually large (e.g., 640 ms), and the legacy UE can only change the UL/DL configuration with the periodicity greater than 640 ms. The semi-statics allocation cannot match fast varying traffic characteristics and environments, and there is space for improving system performance. Thus, changing the UL/DL configuration with a lower periodicity (e.g., lower than 640 ms) is considered.

In general, the legacy UE is configured with a UL/DL configuration according to the SIB1, and this UL/DL configuration is also known by an advanced UE which is configured with an additional UL/DL configuration. The additional configuration is a real configuration operated by the eNB, and the eNB provides services (i.e., performs transmissions and/or receptions) to both the legacy UE and the advanced UE according to the additional configuration.

However, when the advanced UE transfers from a first UL/DL configuration to a second UL/DL configuration (i.e., real configuration), it may happen that the advanced UE intends to perform a transmission in a DL subframe determined according to the second UL/DL configuration, or to perform a reception in a UL subframe according to the second UL/DL configuration. This causes a conflict, since the advanced UE should perform the transmission in the UL subframe and perform the reception in the DL subframe. Besides, the legacy UE may lose scheduling opportunity in a subframe, since the legacy UE does not know the real configuration and the eNB need to provide backward compatibility to the legacy UE. More specifically, the eNB may not schedule the legacy UE to perform a transmission or reception in the subframe, when directions of the subframe determined according to the UL/DL configuration of the legacy UE and the real configuration are different, i.e., when the conflict occurs. Thus, operations of the legacy UE and the network are affected, and resource may be wasted.

Thus, solving the conflict caused due to transfers of the UL/DL configuration or difference of the UL/DL configurations is an important topic to be discussed.

### Summary of the Invention

This in mind, the application aims at providing a method and a communication device for handling resource allocation in a time-division duplexing (TDD) system to solve the abovementioned problem.

This is achieved by a method and a communication device handling the resource allocation in the TDD system according to claims 1, 2, 3 and 13. The dependent claims pertain to corresponding further developments and improvements.

As will be seen more clearly from the detailed description following below, the claimed method of handling resource allocation for a network of a wireless communication system comprises configuring a direction of a subframe of a frame, when the direction determined according to a first uplink (UL)/downlink (DL) configuration operated by a communication device of the wireless communication system and the direction determined according to a second UL/DL configuration operated by the network are different, when the subframe is a UL subframe determined according to the first UL/DL configuration, or when the subframe is the DL subframe determined according to the first UL/DL configuration but at least for the communication device is not valid for performing a measurement; and performing a transmission or reception with the communication device in the subframe.

### Brief Description of the Drawings

Fig. 1 is a table 10 of the UL/DL configuration with subframes and corresponding directions.
Fig. 2 is a schematic diagram of a wireless communication system according to an example of the present invention.
Fig. 3 is a schematic diagram of a communication device according to an example of the present invention.
Fig. 4 is a flowchart of a process according to an example of the present invention.
Fig. 5 is a schematic diagram of subframe allocation of the UL/DL configuration according to an example of the invention.
Fig. 6 is a schematic diagram of subframe allocation of the UL/DL configuration according to an example of the invention.
Fig. 7 is a flowchart of a process according to an example of the present invention.
Fig. 8 is a flowchart of a process according to an example of the present invention.
Fig. 9 is a schematic diagram of subframe allocation of the UL/DL configuration according to an example of the invention.
Fig. 10 is a flowchart of a process according to an example of the present invention.
Fig. 11 is a schematic diagram of subframe allocation of the UL/DL configuration according to an example of the invention.

### Detailed Description

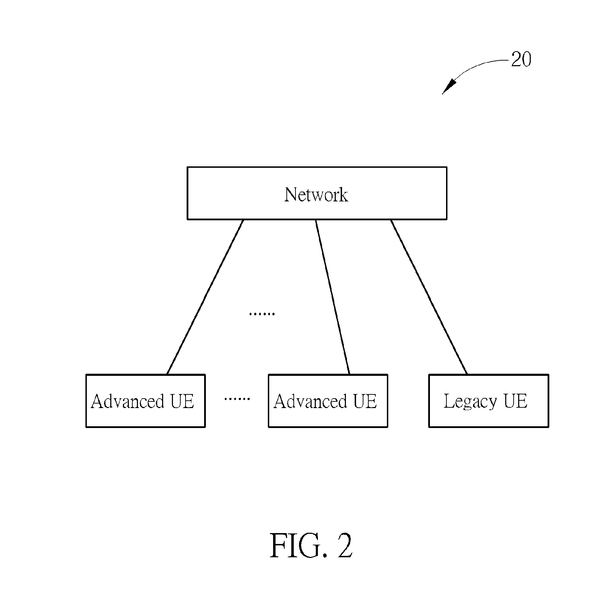

Please refer to Fig. 2, which is a schematic diagram of a wireless communication system 20 according to an example of the present invention. The wireless communication system 20 is briefly composed of a network, advanced user equipments (UEs) and a legacy UE. The wireless communication system 20 supports a time-division duplexing (TDD) mode. That is, the network and the UEs can communicate with each other by using uplink (UL) subframes and downlink (DL) subframes according to one or more UL/DL configurations. A minimum periodicity for changing an UL/DL configuration of the advanced UE is smaller than a minimum periodicity for changing a UL/DL configuration of the legacy UE. That is, the advanced UE can change its UL/DL configuration fast according to fast varying traffic characteristics and environments. Besides, the advanced UE know the UL/DL configuration of the legacy UE, e.g., according to System Information Block Type 1 (SIB1) transmitted by the network. In general, the advanced UE refers to a communication device supporting the 3rd Generation Partnership Project (3GPP) Rel-11 standard or later versions. However, this is not a restriction, and the legacy UE may also have functions similar to those supported by the advanced UE via an update, and is not limited herein.

In Fig. 2, the network and the UEs are simply utilized for illustrating the structure of the wireless communication system 20. Practically, the network can be a universal terrestrial radio access network (UTRAN) comprising a plurality of Node-Bs (NBs) in a universal mobile telecommunications system (UMTS). Alternatively, the network can be an evolved UTRAN (E-UTRAN) comprising a plurality of evolved NBs (eNBs) and/or relays in a long term evolution (LTE) system, a LTE-Advanced (LTE-A) system or an evolution of the LTE-A system.

Furthermore, the network can also include both the UTRAN/E-UTRAN and a core network, wherein the core network includes network entities such as Mobility Management Entity (MME), Serving Gateway (S-GW), Packet Data Network (PDN) Gateway (P-GW), Self-Organizing Networks (SON) server and/or Radio Network Controller (RNC), etc. In other words, after the network receives information transmitted by a UE (advanced UE or legacy UE), the information may be processed only by the UTRAN/E-UTRAN and decisions corresponding to the information are made at the UTRAN/E-UTRAN. Alternatively, the UTRAN/E-UTRAN may forward the information to the core network, and the decisions corresponding to the information are made at the core network after the core network processes the information. Besides, the information can be processed by both the UTRAN/E-UTRAN and the core network, and the decisions are made after coordination and/or cooperation are performed by the UTRAN/E-UTRAN and the core network. A UE can be a mobile phone, a laptop, a tablet computer, an electronic book or a portable computer system. Besides, the network and the UE can be seen as a transmitter or a receiver according to direction, e.g., for an uplink (UL), the UE is the transmitter and the network is the receiver, and for a downlink (DL), the network is the transmitter and the UE is the receiver. More specifically, for the network, the direction of the transmission is DL, and the direction of the reception is UL. For the UE, the direction of the transmission is UL, and the direction of the reception is DL.

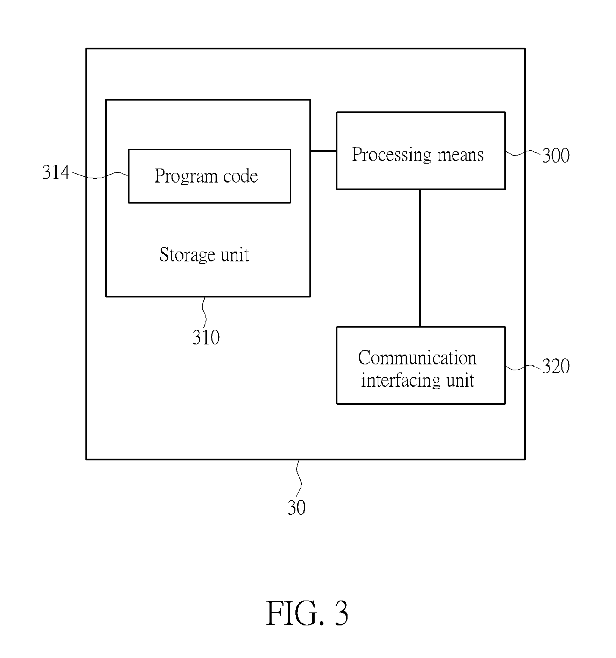

Please refer to Fig. 3, which is a schematic diagram of a communication device 30 according to an example of the present invention. The communication device 30 can be an advanced UE, the legacy UE or the network shown in Fig. 2, but is not limited herein. The communication device 30 may include a processing means 300 such as a microprocessor or Application Specific Integrated Circuit (ASIC), a storage unit 310 and a communication interfacing unit 320. The storage unit 310 may be any data storage device that can store a program code 314, accessed and executed by the processing means 300. Examples of the storage unit 310 include but are not limited to a subscriber identity module (SIM), read-only memory (ROM), flash memory, random-access memory (RAM), CD-ROM/DVD-ROM, magnetic tape, hard disk and optical data storage device. The communication interfacing unit 320 is preferably a transceiver and is used to transmit and receive signals (e.g., messages or packets) according to processing results of the processing means 300.

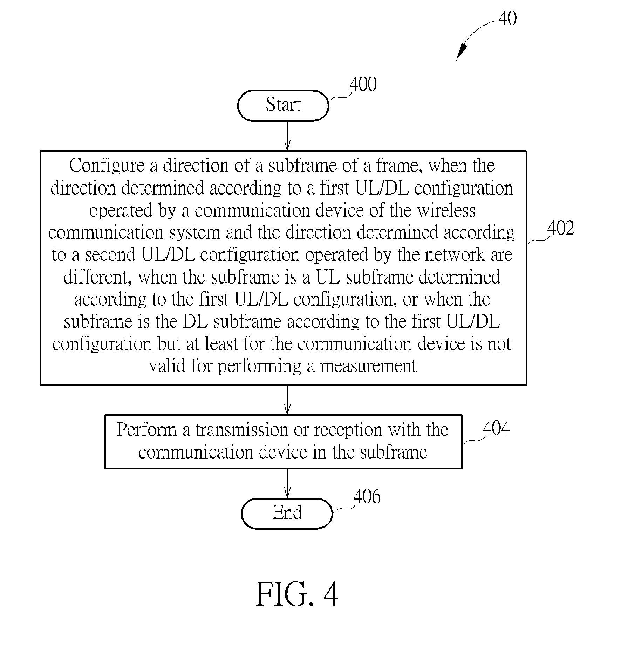

Please refer to Fig. 4, which is a flowchart of a process 40 according to an example of the present invention. The process 40 is utilized in the network shown in Fig. 2, for handling resource allocation in the TDD mode, to communicate with the legacy UE. The process 40 may be compiled into the program code 314 and includes the following steps:
- Step 400:: Start.
- Step 402:: Configure a direction of a subframe of a frame, when the direction determined according to a first UL/DL configuration operated by a communication device of the wireless communication system and the direction determined according to a second UL/DL configuration operated by the network are different, when the subframe is a UL subframe determined according to the first UL/DL configuration, or when the subframe is the DL subframe according to the first UL/DL configuration but at least for the communication device is not valid for performing a measurement.
- Step 404:: Perform a transmission or reception with the communication device in the subframe.
- Step 406:: End.

According to the process 40, the network configures a direction of a subframe of a frame, when the direction determined according to a first UL/DL configuration operated by a communication device of the wireless communication system (e.g., the legacy UE shown in Fig. 2) and the direction determined according to a second UL/DL configuration operated by the network are different, when the subframe is a UL subframe determined according to the first UL/DL configuration, or when the subframe is the DL subframe according to the first UL/DL configuration but at least for the communication device is not valid for performing a measurement. Then, then network performs a transmission or reception with the communication device in the subframe. In other words, the network may reconfigure the direction of the subframe, if one of the abovementioned conditions is satisfied. The transmission or reception may include a UL grant and/or a hybrid automatic repeat request (HARQ) feedback triggered by at least one previous transmission or reception performed in at least one previous subframe of a previous frame according to the first UL/DL configuration. Note that the subframe is not valid for performing the measurement, when the subframe is a Multimedia Broadcast Multicast Service (MBMS) subframe (i.e., Multicast-Broadcast Single Frequency Network (MBSFN) subframe). Thus, the communication device will not lose the transmission or reception due to the difference of the UL/DL configurations, and can still operate regularly. Besides, the impact of the difference of the UL/DL configurations on the communication device can be reduced.

Please note that, realization of the process 40 is not limited. For example, the first UL/DL configuration can be a SIB1 configuration. In this situation, the communication device can be the legacy UE which can only change or configure its UL/DL configuration according to the SIB1 transmitted by the network. Besides, when one of the abovementioned conditions is satisfied, the network can configure the direction of the subframe by configuring the direction of the subframe to a direction of the subframe of the first UL/DL configuration. Note that the measurement mentioned above can include a channel state information (CSI) measurement, a radio resource management (RRM) measurement, or a radio link management (RLM) measurement.

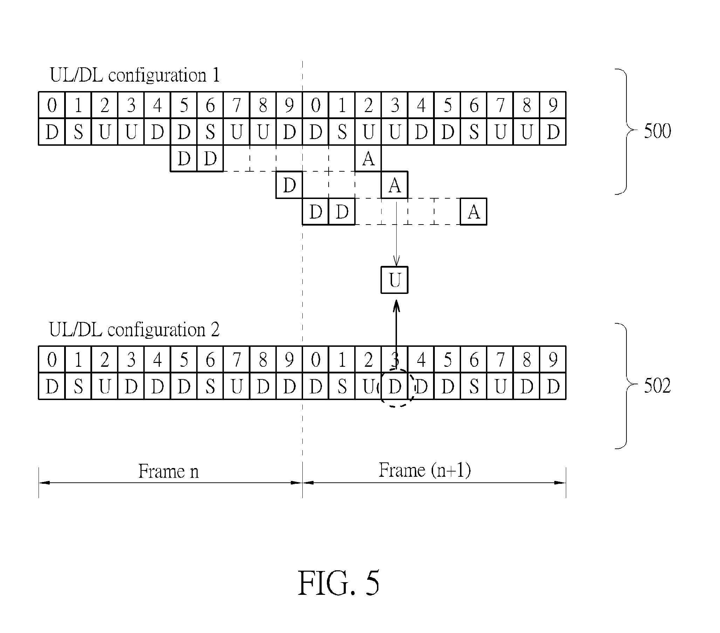

Please refer to Fig. 5, which is a schematic diagram of subframe allocation of the UL/DL configuration according to an example of the invention. As shown in Fig. 5, the UL/DL configuration 1 is operated by the legacy UE, and the UL/DL configuration 2 is operated by the network (and the advanced UE). In general, the legacy UE does not know the real configuration (i.e., the UL/DL configuration 2). Rules for performing triggered receptions (receiving e.g., HARQ feedbacks) in the subframes of the frame (n+1) are represented by directions in the same row as shown in region 500 of Fig. 5. For example, the triggered reception performed in the subframe 2 of the frame (n+1) according to the UL/DL configuration 1 corresponds to the transmissions performed in the subframes 5 and/or 6 of the frame n according to the UL/DL configuration 1. However, if the legacy UE performs a triggered transmission corresponding to (e.g., triggered by) a reception performed in the subframe 9 of the frame n according to the UL/DL configuration 1, the triggered transmission will not be received by the network since the network only performs the reception in the UL subframe and the subframe 3 of the frame (n+1) is the DL frame determined according to the UL/DL configuration 2 as shown in region 502 of Fig. 5. In this situation, the network treats the subframe 3 of the frame (n+1) as the UL subframe according to the present invention, i.e., according to the first condition of step 402. That is, the network will configure the subframe 3 of the frame (n+1) as the UL subframe, such that the triggered transmission performed by the legacy UE in the subframe 3 of the frame (n+1) can be received by the network. Thus, the conflict occurred due that the UL/DL configurations of the network and the legacy UE are different is solved, and the network and the legacy UE can operate regularly.

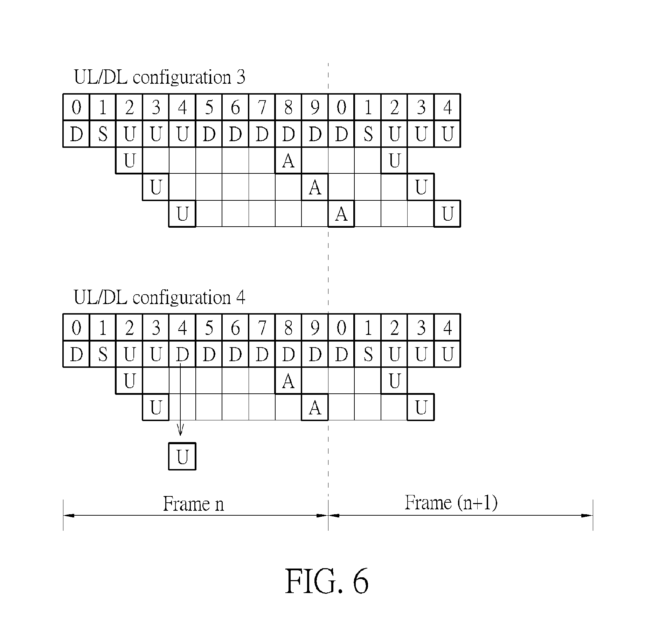

Please refer to Fig. 6, which is a schematic diagram of subframe allocation of the UL/DL configuration according to an example of the invention. As shown in Fig. 6, the UL/DL configuration 3 is operated by the legacy UE, and the UL/DL configuration 4 is operated by the network (and the advanced UE). In general, the legacy UE does not know the real configuration (i.e., the UL/DL configuration 4). If the legacy UE performs a transmission in the subframe 4 of the frame n according to the UL/DL configuration 3, the transmission will not be received by the network since the network only performs the reception in the UL subframe and the subframe 4 of the frame n is the DL frame determined according to the UL/DL configuration 4. In this situation, the network treats the subframe 4 of the frame n as the UL subframe according to the present invention, i.e., according to the first condition of step 402. That is, the network will configure the subframe 4 of the frame n as the UL subframe, such that the transmission performed by the legacy UE in the subframe 4 of the frame n can be received by the network. Thus, the conflict occurred due that the UL/DL configurations of the network and the legacy UE are different is solved, and the network and the legacy UE can operate regularly.

Please refer to Fig. 7, which is a flowchart of a process 70 according to an example of the present invention. The process 70 is utilized in the network shown in Fig. 2, for handling resource allocation in the TDD mode. The process 70 may be compiled into the program code 314 and includes the following steps:
- Step 700:: Start.
- Step 702:: Configure a SIB1 configuration as an UL/DL configuration 1.
- Step 704:: Configuring at least one DL subframe of the UL/DL configuration 1 as a subframe type not for performing a measurement.
- Step 706:: End.

According to the process 70, the network configures a SIB1 configuration as an UL/DL configuration 1, and configures at least one DL subframe of the UL/DL configuration 1 as a subframe type not for performing a measurement. That is, the network configures the UL/DL configuration 1 to the legacy UE, since the SIB1 configuration is usually operated by the legacy UE. Besides, the network may configure a subframe 4 of the UL/DL configuration 1 as the subframe type not for performing the measurement. In another example, the network may configure the subframe 4 and a subframe 9 of the UL/DL configuration 1 as the subframe type not for performing the measurement. That is, both the subframes 4 and 9 are not valid for performing the measurement. Note that the measurement can include a CSI measurement, a RRM measurement, or a RLM measurement. When configuring a subframe (e.g., the subframe 4 and/or 9) not valid for performing the measurement, the network can simply configure the subframe as a MBMS subframe. Thus, the impact of the difference of the UL/DL configurations on the legacy UE can be reduced.

Please note that, if the network configures the subframe 9 as the MBMS subframe (i.e., not valid for performing the measurement), the legacy UE cannot perform the reception (i.e., receiving the DL data) in the subframe 9 except not performing the measurement in the subframe 9. On the other hand, if the network simply configures the subframe 9 as the DL subframe (i.e., valid for performing the measurement), the legacy UE can perform the reception and the measurement in the subframe 9 if the real configuration is not the UL/DL configuration 0. However, if the real configuration is the UL/DL configuration 0 (i.e., the subframe 9 is the UL subframe), the legacy UE receives nothing and a wrong result may be obtained after performing the measurement. Thus, the legacy UE can only receive DL data in the subframes 0 and 5 in the worst case (i.e., both the subframes 4 and 9 are configured as the MBMS subframes, and the special subframe is not used for transmitting the DL data), if the legacy UE is configured with the UL/DL configuration 1. If only the subframe 4 is configured as the MBMS subframe, the legacy UE gets one more subframe (i.e., the subframe 9) for performing the reception, and the DL throughput is improved. However, the legacy UE receives nothing and obtains the wrong result after performing the measurement, if the real configuration is the UL/DL configuration 0. Thus, there is a tradeoff between the DL throughput and the accuracy of the measurement. Note that the accuracy of the measurement can still be improved, if the network triggers an aperiodic CSI report, ignores the result of the measurement in the subframe 9, compensates the result of the measurement in the subframe 9, or overestimates the result of the measurement in the subframe 9. Furthermore, when determining a set of UL/DL configurations for performing configuration transfer (i.e., traffic adaption), the network may exclude the configuration 0 from the set of UL/DL configurations, to avoid obtaining the wrong result from the measurement and to increase a number of DL subframes (e.g., for transmitting/receiving DL data).

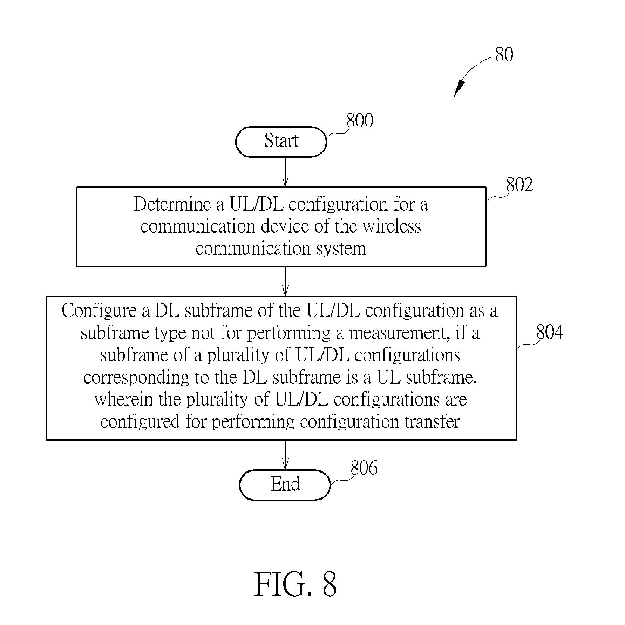

Please refer to Fig. 8, which is a flowchart of a process 80 according to an example of the present invention. The process 80 is utilized in the network shown in Fig. 2, for selecting a UL/DL configuration in the TDD mode. The process 80 may be compiled into the program code 314 and includes the following steps:
- Step 800:: Start.
- Step 802:: Determine a UL/DL configuration for a communication device of the wireless communication system.
- Step 804:: Configure a DL subframe of the UL/DL configuration as a subframe type not for performing a measurement, if a subframe of a plurality of UL/DL configurations corresponding to the DL subframe is a UL subframe, wherein the plurality of UL/DL configurations are configured for performing configuration transfer.
- Step 806:: End.

According to the process 80, the network first selects a UL/DL configuration for a communication device of the wireless communication system (e.g., the legacy UE and/or the advanced UE). Then, the network configures a DL subframe of the UL/DL configuration as a subframe type not for performing a measurement, if a subframe of a plurality of UL/DL configurations corresponding to the DL subframe is a UL subframe, wherein the plurality of UL/DL configurations are configured for performing configuration transfer (i.e., traffic adaptation). For example, the UL/DL configuration can be a SIB1 configuration. That is, the network determines the UL/DL configuration for the legacy UE and also for the advanced UE which does not perform the configuration transfer. Note that the measurement can include a CSI measurement, a RRM measurement, or a RLM measurement. When configuring a DL subframe not for performing the measurement, the network can simply configure the subframe as a MBMS subframe. Thus, the communication device operating the UL/DL configuration will not perform the measurement in the DL subframe and get a wrong result, when the DL subframe is actually a UL frame determined according to one of the plurality of UL/DL configurations which is currently operated by the network.

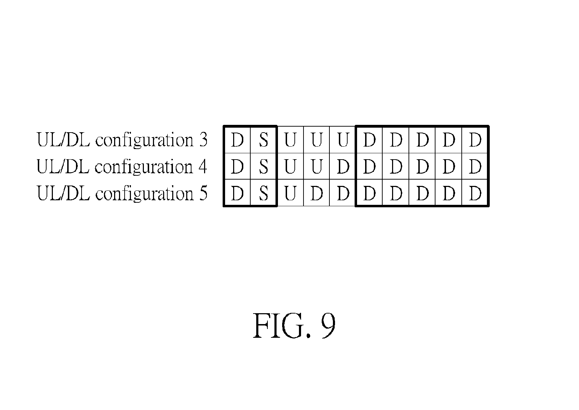

Please refer to Fig. 9, which is a schematic diagram of subframe allocation of the UL/DL configuration according to an example of the invention. As shown in Fig. 9, UL/DL configurations 3, 4 and 5 are considered for performing configuration transfer. That is, each of the UL/DL configurations can be selected by the network as a SIB1 configuration (e.g., for the legacy UE and also for the advanced UE which does not perform the configuration transfer) and/or a real configuration (for the network and the advanced UE). For example, if the network selects the UL/DL configuration 5 as the SIB1 configuration, the network configures the subframes 3 and 4 as the MBMS subframes since the subframe 3 of the UL/DL configurations 3 and 4 is the UL subframe and the subframe 4 of the UL/DL configuration 3 is the UL subframe. In another example, if the network selects the UL/DL configuration 4 as the SIB1 configuration, the network configures the subframe 4 as the MBMS subframe since the subframe 4 of the UL/DL configuration 3 is the UL subframe. In another example, if the network selects the UL/DL configuration 3 as the SIB1 configuration, the network does not need to configure any DL subframe, since all subframes of the UL/DL configurations 3, 4 and 5 corresponding to the DL subframes of the UL/DL configuration 3 are DL subframes. In this situation, the legacy UE can perform a transmission, a reception and/or the measurement in each subframe. Thus, the legacy UE will not perform the measurement in a DL subframe which is actually a UL subframe according to the above examples.

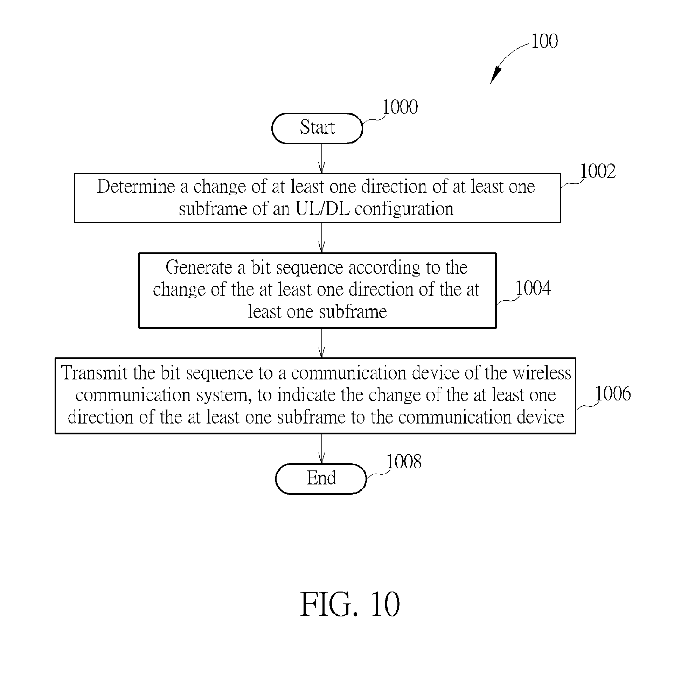

Please refer to Fig. 10, which is a flowchart of a process 100 according to an example of the present invention. The process 100 is utilized in the network shown in Fig. 2, for handling resource allocation in the TDD mode. The process 100 may be compiled into the program code 314 and includes the following steps:
- Step 1000:: Start.
- Step 1002:: Determine a change of at least one direction of at least one subframe of an UL/DL configuration.
- Step 1004:: Generate a bit sequence according to the change of the at least one direction of the at least one subframe.
- Step 1006:: Transmit the bit sequence to a communication device of the wireless communication system, to indicate the change of the at least one direction of the at least one subframe to the communication device.
- Step 1008:: End.

According to the process 100, the network determines a change (e.g., update) of at least one direction of at least one subframe of an UL/DL configuration, and generates a bit sequence according to the change of the at least one direction of the at least one subframe. Then, the network transmits the bit sequence to a communication device of the wireless communication system (e.g., the legacy UE or the advanced UE shown in Fig. 2), to indicate the change of the at least one direction of the at least one subframe to the communication device. In other words, the network represents the change of the direction of one or more subframes by using the bit sequence. Correspondingly, the communication device identifies the change of the direction according to the bit sequence, and performs transmissions or receptions in the subframes according to the changed direction. Thus, the communication device can know a direction of a subframe, and the conflict occurred due to different directions of the subframe can be solved.

Please note that, realization of the process 100 is not limited. For example, the bit sequence can be a bitmap, and at least one bit of the bitmap corresponding to the at least one subframe is bit "1" (or bit "0"), and the rest bit of the bitmap is bit 0 (or bit "1"). In another example, the bit sequence can be a UL extension message, and each type of the UL extension message uniquely corresponds to a type of the change of the at least one direction of the at least one subframe.

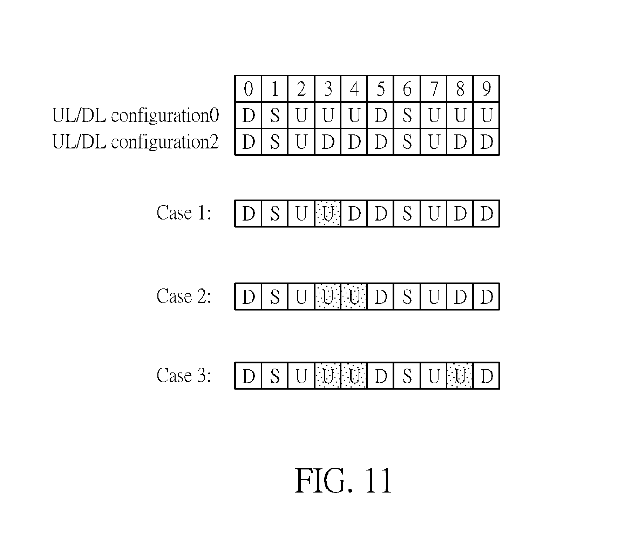

Please refer to Fig. 11, which is a schematic diagram of subframe allocation of the UL/DL configuration according to an example of the invention. Fig. 11 is used for illustrating ways of indicating a change of a direction of a subframe by using the bitmap indicator or the UL extension message. As shown in Fig. 11, the network and the communication device (e.g., the advanced UE or the legacy UE) are operating the UL/DL configuration 0, and the network intends to change directions of one or more subframes according to the UL/DL configuration 2. For example, 3 cases of configuring the transmission directions of the subframes are considered. That is, the network can change the directions of the subframes in 3 ways in the present example. In the case 1, the network only changes the direction of the subframe 3. In the case 2, the network changes the directions of the subframes 3 and 4. In the case 3, the network changes the directions of the subframes 3, 4 and 8. When using the bitmap indicator, bit "1" (or bit "0") can be used for representing that the direction of the corresponding subframe is changed while bit "0" (or bit "1") is used for representing that the direction of the corresponding subframe remains unchanged. That is, the network can transmit 10 bits "0001000000", "0001100000" or "0001100010" to the communication device, to indicate the case 1, 2 or 3, respectively, to the communication device. Besides, since the directions of the subframes 0-2 and 5-6 are the same for all the UL/DL configurations 0-9, the bits corresponding to the subframes 0-2 and 5-6 can be saved. That is, the network can transmit 6 bits "010000", "011000" or "011010" to the communication device, to indicate the case 1, 2 or 3, respectively, to the communication device. On the other hand, only 3 bits are needed when using the UL extension message, when the 3 cases are considered. For example, the network can transmit 3 bits "001 ", "010" or "011" to the communication device, to indicate the case 1, 2 or 3, respectively, to the communication device. Thus, the network can indicate the transmission direction of the subframe when needed according to the above description. Although only 3 cases are considered in the present example, this is not a restriction. Those skilled in the art can readily extend the above example to examples with more cases, e.g., by changing more bits in the bitmap indicator, or using the UL extension message with more bits.

Those skilled in the art should readily make combinations, modifications and/or alterations on the abovementioned description and examples. The abovementioned steps of the processes including suggested steps can be realized by means that could be a hardware, a firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include a system on chip (SOC), system in package (SiP), a computer on module (COM), and the communication device 30.

To sum up, the present invention provides a method for handling resource allocation in the TDD mode. The conflict occurred due to different UL/DL configurations of the advanced UE, the legacy UE and the network or the transfer of the UL/DL configuration is solved. Further, the change of the UL/DL configuration can be indicated to the communication device efficiently according to the present invention.

## Claims

1. A method of handling resource allocation for a network of a wireless communication system, **characterized by** the method comprising the steps of:
configuring a direction of a subframe of a frame, when the direction determined according to a first uplink/downlink (UL/DL) configuration operated by a communication device of the wireless communication system and the direction determined according to a second UL/DL configuration operated by the network are different, when the subframe is a UL subframe determined according to the first UL/DL configuration, or when the subframe is the DL subframe determined according to the first UL/DL configuration but at least for the communication device is not valid for performing a measurement (402); and
performing a transmission or reception with the communication device in the subframe (404).

2. A method of handling resource allocation for a network of a wireless communication system, **characterized by** the method comprising the steps of:
configuring a System Information Block Type 1 (SIB1) configuration as an uplink/downlink (UL/DL) configuration 1 (702); and
configuring at least one DL subframe of the UL/DL configuration 1 as a subframe type not for performing a measurement (704).

3. A method of selecting an uplink/downlink (UL/DL) configuration for a network of a wireless communication system, **characterized by** the method comprising the steps of:
determining a UL/DL configuration for a communication device of the wireless communication system (802); and
configuring a DL subframe of the UL/DL configuration as a subframe type not for performing a measurement, if a subframe of a plurality of UL/DL configurations corresponding to the DL subframe is a UL subframe, wherein the plurality of UL/DL configurations are configured for performing configuration transfer (804).

4. The method of claim 1, **characterized in that** the transmission or reception comprises at least one of a UL grant and a hybrid automatic repeat request (HARQ) feedback triggered by at least one previous transmission or reception performed in at least one previous subframe of a previous frame according to the first UL/DL configuration.

5. The method of claim 1, **characterized in that** the network configures the direction of the subframe by configuring the direction of the subframe to a direction of the subframe of the first UL/DL configuration.

6. The method of claim 1, **characterized in that** the first UL/DL configuration is a System Information Block Type 1 (SIB1) configuration.

7. The method of claim 2, **characterized in that** the at least one DL subframe comprises a subframe 4.

8. The method of claim 2, **characterized in that** the at least one DL subframe comprises a subframe 9.

9. The method of claim 2, **characterized in that** the step of configuring the at least one DL subframe of the UL/DL configuration 1 as the subframe type not for performing the measurement comprises the step of:
configuring the at least one DL subframe of the UL/DL configuration 1 as at least one Multimedia Broadcast Multicast Service (MBMS) subframer, respectively.

10. The method of claim 3, **characterized in that** the step of configuring the DL subframe of the UL/DL configuration as the subframe type not for performing the measurement comprises the step of:
configuring the DL subframe of the UL/DL configuration as a Multimedia Broadcast Multicast Service (MBMS) subframe.

11. The method of claim 3, **characterized in that** the UL/DL configuration is a System Information Block Type 1 (SIB1) configuration.

12. The method of claim 1, 2 or 3, **characterized in that** the measurement comprises a channel state information (CSI) measurement, a radio resource management (RRM) measurement, or a radio link management (RLM) measurement.

13. A method of handling resource allocation for a network of a wireless communication system, **characterized by** the method comprising the steps of:
determining a change of at least one direction of at least one subframe of an uplink/downlink (UL/DL) configuration (1002);
generating a bit sequence according to the change of the at least one direction of the at least one subframe (1004); and
transmitting the bit sequence to a communication device of the wireless communication system, to indicate the change of the at least one direction of the at least one subframe to the communication device (1006).

14. The method of claim 13, **characterized in that** the bit sequence is a bitmap, and at least one bit of the bitmap corresponding to the at least one subframe is bit 1, and the rest bit of the bitmap is bit 0.

15. The method of claim 13, **characterized in that** the bit sequence is a UL extension message, and each type of the UL extension message uniquely corresponds to a type of the change of the at least one direction of the at least one subframe.
